# EUROPEAN PATENT SPECIFICATION

(11) **EP 4 222 548 B1**
(45) Date of publication and mention of the grant of the patent: **04.03.2026**
(21) Application number: 20785481.1
(22) Date of filing: 29.09.2020
(51) Int. Cl.: G02C 9/04, G02B 27/00, G02B 27/01, G02C 11/00

(54) **ADDITIVELY MANUFACTURED EYE TRACKING SPECTACLES**
GENERATIV GEFERTIGTE AUGENVERFOLGUNGSBRILLE
LUNETTES DE SUIVI OCULAIRE FABRIQUÉES DE MANIÈRE ADDITIVE

(43) Date of publication of application: 09.08.2023
(73) Proprietor: Viewpointsystem GmbH, 1010 Wien (AT)
(72) Inventor: HAUSER, Michael, 3033 Altlengbach (AT); VOIGT, Johannes, 6800 Feldkirch (AT); PORAK, Lukas, 1220 Wien (AT)
(74) Representative: Schardmüller Gall-Schuhmann Patentanwälte OG
(86) International application number: PCT/EP2020/077216
(87) International publication number: WO 2022/069018

(56) References cited:
- WO-A1-2017/144964
- WO-A1-2020/127732
- CN-A- 106 291 984
- CN-A- 110 161 723
- KR-B1- 101 397 357

## Description

### TECHNICAL BACKGROUND

The present invention concerns eye tracking spectacles 3D printed, being said spectacles able to determine the pupil center of a wearer.

Eye-tracking spectacles usually comprise a camera, which is oriented onto an eye of the relevant spectacles wearer; the coordinates of the pupil and the viewing direction of the eye can be ascertained using such spectacles. Together with a so-called field of vision video, which is prepared by a further field of vision camera arranged on the spectacles in the viewing direction of a user, the point at which the user looks can be ascertained using such spectacles.

These known spectacles have the disadvantage that the arrangement of the camera can itself result in impairment of the behaviour of the user. Such spectacles are generally conceived as a measurement device or research utensil and are also clearly recognizable as such. Test persons do accept the relevant spectacles in regions separated from public view, such as a vehicle or a special test environment, but, above all in environments in which the relevant test person has to act unshielded from other surrounding people, they result in an influence of the behaviour of the test person and the persons in the surroundings. The feedback which a human receives from the reactions of his surroundings to his own appearance often has a direct influence on the behaviour of the relevant person. This influence leads via the unconscious and therefore withdraws direct control by the relevant person. Publicly wearing a clearly recognizable and striking apparatus on the head results in reactions of the surroundings, which in turn can have direct influence on the behaviour, also the viewing behaviour, of the relevant test person. In difficult test situations in this regard, this can result in a high level of influence of the test result by way of the means of the test itself.

Such known spectacles record the eye of the test person from the bottom front. It has been shown that this camera position can have negative effects on the accuracy and quality of the achieved measurement results.

These known spectacles additionally have the disadvantage that the protruding parts, such as cameras and cables, restrict the possible uses of such known spectacles to the research uses. For example, such spectacles represent a substantial risk of accident in the surroundings of rapidly rotating machines. Pieces of clothing or equipment objects worn on the body having loops or protruding parts are forbidden in numerous work environments for reasons of safety.

### PRIOR ART

US2016/0206196 discloses eye-tracking spectacles aiming to solve the relevant disadvantages mentioned above.

This prior art document describes eye-tracking spectacles comprising two eye cameras arranged in the nose frame of the glasses and a view camera in the middle of the glasses. In particular according to one preferred embodiment of the prior art invention, it is provided that at least one field of vision camera is arranged on the glasses frame. The field of vision camera is provided to record a field of vision video including individual and successive field of vision images. The recordings of the two eye acquisition cameras and the at least one field of vision camera can thus be entered in correlation in the field of vision video of the respective viewpoint.

Furthermore by arranging the eye acquisition camera in the nose frame part, influence of the pupil detection by eyelashes surrounding the eye can be reduced. Furthermore, the influence of interfering reflections on the pupils can thus be reduced. The blinking of the wearer can also be recognized more exactly than previously by detecting both eyes of a wearer.

Because of the stiffness of the structure of the prior art eye tracking glasses they not easily conform to different shape and sizes of one wearer head. For instance in cases of small head sisze this leads to too much strain on the device that aim to retain firmly the glasses on the wearer's head and too much pressure on the wearer's nose by nosepad.

On the contrary in case of big size head, stiffness of the eye tracking glasses frame may lead to too much pressure on the wearer's temples being specific sensitive points on the wearer's head which may cause headache and further related patologies. Furthermore in case of very big head it may occur that the hottest parts of the eyetracking glasses (i.e. those including PCBs) might be too close to the head of the wearer leading to discomfort. In some cases the mentioned stifness is due to the fact that the eye tracking glasses frame is formed by two or more parts injuction molded and glued together, forming the outer shell of the frame including inside eye cameras, environment camera and other eye tracking glasses hi tech component. A glasses frame produced via a gluing process makes the frame very stiff and diffucult to adapt to different shape and size of head wearer's. Furthermore the gluing producing step requires particular expertise on the workers, being a manual step, and it is time consuming, because of the needed preparatory steps including cleaning steps of the two parts to be glued together, refining steps and so on.

WO 2020/127732 A1 discloses a method for generating and displaying a virtual object to an individual user by an optical system consisting of gaze-tracking glasses and at least one display unit connected to the gaze-tracking glasses, the display unit having a first display, the gaze-tracking glasses having a first eye-tracking camera, the first display being arranged in a first viewing region of the gaze-tracking glasses.

### PURPOSES OF THE INVENTION

One objective of the present invention, according to a first of its aspects, is obtaining eye tracking spectacles being able to adapt itself to different size/shape of wearer heads, from the smal size ones to the very big ones.

A second objective of the present invention is obtaining eye tracking spectacles able to reduce strain on the device/strcture which firmly maintain the glasses on wearer's head and able to reduce pressure on the nose by nosepad in case of small size head.

A third objective of the present invention is obtaining eye tracking spectacles able on the contrary to confortable for users with big head not causing too much pressure on users' temples and not to get hottest parts of the glasses too close to the head of the wearer. A further objective is to obtain eye tracking spectacles able to reduce their manufacturing time, avoiding to glue together parts of the glasses frame.

A further objective of the present invention is to provide eye tracking spectacles which may be easily customized with specific texture for specific customers or specific uses. Another objective of the present invention is to provide eye tracking spectacles to which may be easily add further devices like MR displays, chromatic lenses, and further devices in general suitable for specific uses.

Another objective of the present invention is to provide eye tracking spectacles with a reduced dimension frame able to contain the necessary cameras and electronical components.

A further objective of the present invention is obtaining eye tracking working in an optimizes way, maintaining the part of the frame including eye cameras perfectly stable, obtaining an optimized pupil detection measurements, even if the glasses fits people of different head sizes ans shapes.

Another objective of the present invention is to provide eye tracking spectacles easy to be assembled in the manufacturing stage, but very difficult to be disassembled when in use.

Another objective of the present invention is to provide eye tracking spectacles achieving significantly improved results for detection of the pupil position of most ethnics of human beings, since the measurement apparatus is still no longer be perceived by the surroundings and therefore also does not result in negative influences of the test person, reducing the need to have a lot of nose pads to adapt the spectacles to different wearers and at the same time suitable to be worn as work spectacles or protective spectacles.

### SUMMARY OF THE INVENTION

Hereinafter are summarized some technical aspects of the present inventions which enable some of the most important purposes to be achieved.

According to a first aspect this invention relates to eye tracking spectacles comprising a frame, wherein the frame has a U-shaped portion containing at least eye cameras and field of view camera, said frame being formed by at least two main parts, a carrier and a style cover being each other a single unitary structure suitable to be created by an additively manufacturing process, and wherein said carrier and said style cover are firmly and stably fastened together by a mechanical fastening profile created via a additively manufactured process.

Such eye tracking spectacles has a particular flexibilty, allowing an ending part of the style cover to slide on the corresponding ending part of the carrier when in use and at the same time guarantee a stable fastening of the spectacle frame containing eye cameras, field of view camera, and electronical components in general.

According to a second aspect this invention relates to eye tracking spectacles wherein the mechanical fastening profile is a snap fit profile able to reduce the assembling process during the manufacturing phase.

According to a third aspect this invention relates to eye tracking wherein the snap fit profile is a cantilever snap fit profile and comprises a retaining lip comprising in turn an entrance side allowing the retaining lip overcoming a connecting ledge on a corresponding profile, in order to get the fastening phase easy.

According to a fourth aspect this invention relates to eye tracking spectacles, wherein both the carrier and the style cover has an C-shaped section in order to increase the available room inside the frame, to place all cameras and electronical components needed, resulting in a smaller eye tracking frame.

According to a fifth aspect this invention relates to eye tracking spectacles, wherein the mechanical fastening profile is arranged to change gradually its geometry section providing a stronger fastening connection between the style cover and the carrier at least in the U-shaped portion of the spectacles frame.

According to a sixth and a seventh aspect this invention relates to eye tracking spectacles the style cover, created via a additively manufactured process, is specifically designed respectively for engaging a further device to the frame of the eye tracking spectacles and for making the spectacles being easily customizable for specific uses or customers.

According to a eighth aspect this invention relates to a method for additively manufacturing determining the eye tracking spectacles achieving the objectives and technical effects hereinbefore mentioned.

### FIGURES

The structural and functional features of the present invention and its advantages with respect to the known prior art, will become even clearer from the underlying claims, and in particular from an examination of the following description, made with reference to the attached figures which show a preferred but not limited schematic embodiment of the invented computer-implemented method, system, device, in which:
Figure 1 illustrates a 3D view of the eye tracking spectacles according to the present invention;
Figure 2 illustrates a 3D view of the eye tracking spectacles partly disassembled according to the present invention;
Figure 3 illustrates a 3D view of the carrier of the eye tracking spectacles according to the present invention;
Figure 4 illustrates a 3D view of the style cover of the eye tracking spectacles according to the present invention;
Figure 5 illustrates a 3D view of a second embodiment of the carrier, of the eye tracking spectacles according to the present invention;
Figure 6 illustrates a 3D view of a second embodiment of the style cover of the eye tracking spectacles according to the present invention;
Figures 7A, 7B, 7C, 7D, 7E, 7F illustrate section views of the clipping profile part of the style cover and of the carrier of the frame of the eye tracking spectacles according to different embodiments of the present invention;
Figure 8 illustrates a 3D view of the style cover according to a third embodiment of the present invention, while figures 8a, 8b illustrate different devices applicable to the third embodiment of the style cover.
Figure 9A is a top view of the frame of the spectacles according to the present invention, particularly suitable for smaller heads. Figure 9B is a side view of the sideway parts of the frame according to the condition showed if figure 9A and figure 9C is a section of the sideway parts of the frame according to the condition showed if figure 9A.
Figure 9D is a top view of the frame of the spectacles according to the present invention, particularly suitable for smaller heads. Figure 9E is a side view of the sideway parts of the frame according to the condition showed if figure 9D and figure 9F is a section of the sideway parts of the frame according to the condition showed if figure 9D.

### DETAILED DESCRIPTION OF THE INVENTION

In general, this disclosure describes improved eye tracking spectacles and manufacturing method thereof.

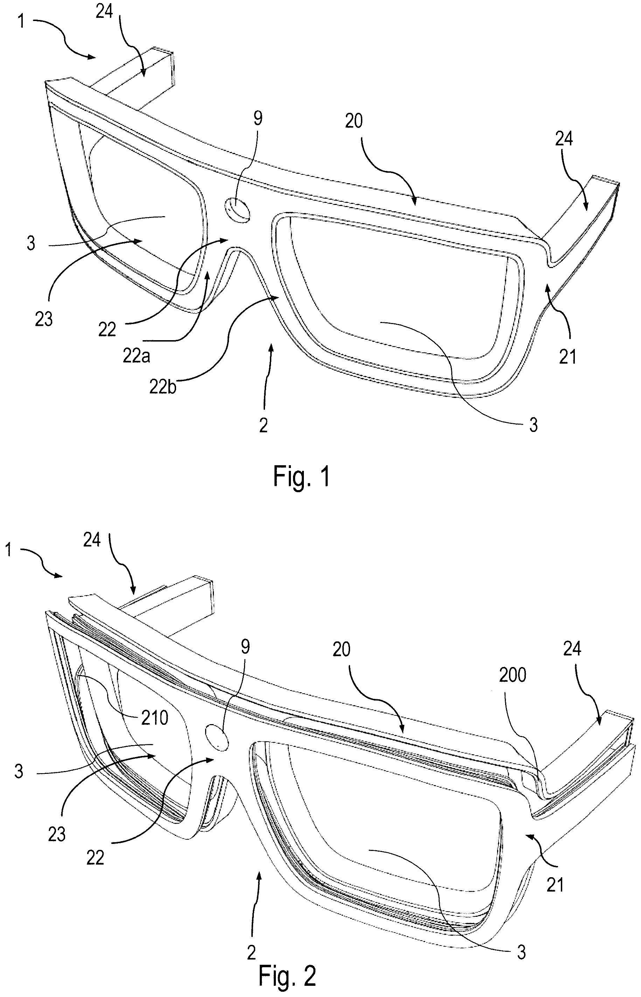

The eye tracking spectacle 1 has a frame 2, wherein the frame 2 has at least one receiving opening/lens receptacle opening 3 for a disk-like structure, and wherein the frame 2 has an U-shaped portion 22 where preferably are located a right eye acquisition camera 7 and a left eye acquisition camera 8 as showed in fig. 1.

The frame 2 has a U-shaped portion 22 provided for arranging the spectacles 1 on the nose of a human, a front part 23 and sideway parts 24. The regions of the frame 2 which laterally border this recess are referred to as the right nose frame part 22a and the left nose frame part 22b. The right and the left nose frame parts 22a, 22b are preferably regions of the frame 2 enclosing the receiving opening/lens receptacle openings 3 which merge directly and/or integrally into the further regions of the frame 2. The right and the left nose frame parts 22a, 22b may be also a right and a left part of a U-shaped portion 22 created by the shape of lenses of the spectacles.

Due to the integration of the eye acquisition cameras 7, 8 in the nose frame parts 22a, 22b, the spectacles 1 do not have any protruding parts, and are therefore suitable to be worn as work spectacles or protective spectacles. The viewing movements of a worker or of a human operating a machine can thus not only be monitored and analysed, but rather can be used directly for controlling the machine. In addition, the capability for controlling a machine can thus be monitored, since the physical and mental state of the relevant human can be concluded on the basis of the eye movements, for example, whether he is overtired or under the influence of psychotropic substances. Thus, above all in the case of public use of the spectacles 1, significantly improved results can be achieved, because the measurement accuracy is increased, and also the measurement apparatus can now no longer be perceived by the surroundings and therefore also does not result in negative influences of the test person.

The specifications "right" or "left" or "high" or "low" relate to the intended manner of wearing the spectacles 1 by a human being.

As mentioned before the right eye acquisition camera 7 is arranged in the right nose frame part 22a, and the left eye acquisition camera 8 is arranged in the left nose frame part 22b. The two eye acquisition cameras 7, 8 are designed as digital cameras and have an objective lens. The two eye acquisition cameras 7, 8 are each provided to film one eye of the human wearing the relevant spectacles 1 , and to prepare in each case an eye video including individual eye images or individual images.

The eye acquisition cameras 7, 8 have a suitable focal length to acquire the corresponding regions of the eye from the position in the nose frame part. The focal length and the aperture angle which can be acquired using a focal length are dependent on the sensor size of the camera and can be selected without problems by the embodying person skilled in the art using the present specifications.

A primary purpose of the eye acquisition cameras 7, 8 is to acquire the pupil of the human wearing the spectacles 1, therefore they must be directed towards the position of the eyeball of the wearer.

Applicant realised that there are a lot of differences between the shape of the head, forehead of human beings therefore it should be advisable to find a comfortable eye tracking glasses.

According to one preferred embodiment of present spectacles 1, it is provided that at least one field of vision camera 9 is arranged on the frame 2, preferably in the U-shaped portion 22 of the frame 2. The field of vision camera 9 is provided to record a field of vision video including individual and successive field of vision images. The recordings of the two eye acquisition cameras 7, 8 and the at least one field of vision camera 9 can thus be entered in correlation in the field of vision video of the respective viewpoint. The field of vision camera 9 is only explicitly shown in FIG. 1 on the spectacles 1 .

It is preferably provided that the at least one field of vision camera 9 is arranged in a region or a bridge between the right nose frame part 22a and the left nose frame part 22b. A larger number of field of vision cameras 9 can also be arranged in the spectacles 1.

It is preferably provided that the spectacles 1 have electronical components 10 for instance comprising a data processing unit and a data interface, the data processing unit may be connected to the right eye acquisition camera 7 and the left eye acquisition camera 8. The spectacles 1 furthermore may have an energy accumulator for the energy supply of the right eye acquisition camera 7 and the left eye acquisition camera 8, and also the data processing unit and the data interface.

According to one particularly preferred embodiment of present spectacles 1 it is provided that the electronical components 10 may are arranged in the sideway part 24 of the frame 2 of the spectacles. The entire recording, initial analysis, and storage of the recorded videos can thus be performed in or by the spectacles 1 themselves. Interfering connections can thus be omitted.

A data processing unit also comprises a data memory. It is preferably designed as a combination of a microcontroller or DSP together with a RAM. The data processing unit is connected in a signal-conducting manner to a data interface. It can also be provided that the data interface and the data processing unit are formed jointly in hardware, for example, by an ASIC or an FPGA. The interface is preferably designed as a wireless interface, for example, according to the Bluetooth standard or IEEE 802.x, or as a wired interface, for example, according to the USB standard, wherein in this case the spectacles 1 have a corresponding socket, for example, according to micro-USB. Additional sensors could be inserted in the spectacles and connected with the data processing unit.

The data processing unit and the data interface may be connected at least indirectly to the energy accumulator by circuitry, and are connected in a signal-conducting manner to the three cameras, the field of vision camera 9, the right eye acquisition camera 7 , and the left eye acquisition camera 8.

As already described, the present described spectacles 1 are particularly well suitable for being adapt to different human head sizes, because of the presence of a mechanical fastening profile between two main parts constituting the spectacles frame 2. A mechanical fastening profile (200, 210), created in more than one point along the spectacles frame, provides with mechanical tolerances, allowing small movements between those two parts being able to move one another, thus giving a certain flexibility to the frame 2 to make it easly adaptable to different head sizes. If those two main parts were glued together, even if in only one point, the spectacles frame would be very stiff, without any possibility to be adapted to different head sizes.

Furthermore in order to confer to the spectacles frame 2 a robust structure, able to contain and in particular protect high technological components, like eye cameras 7, 8, field of view camera 9 and the necessary electronical components 10, the frame 2 is mainly constituted by two main parts, i.e. a carrier 20 which has the function of supporting said high technological components, and a style cover 21 having the function of securely closing the frame 2. The carrier 20 comprises a front part 203 and sideway parts 204, and the style cover 21 comprises corresponding front part 213 and sideway parts 214. When the carrier 20 and the style cover 21 are fastened together, they enclose said high technological components, protecting them from possible damages during spectacles usage. In one preferred embodiment the U shaped portion 22 encloses the eye cameras 7, 8 and at least one field of view cameras 9, while one of the sideway portion 24 encloses the electronical components 10. In any case it is extremely important that said carrier 20 and said style cover 21 enclose, via the mechanical fastening profile, at least the eye cameras 7, 8 and at least one field of view camera 9, and possibly the electronical components 10, when said carrier 20 and said style cover 21 are fastened together. This feature gives a reliable stability to the most important portion of an eye tracking spectacles for their usage and in particular for the measurement stage, i.e. the portion where are placed the eye cameras 7, 8 and field of view camera 9.

Furthermore it is necessary to point out that an injection moulding process is not a suitable process to manufacture such a complex main parts (carrier 20 and style cover 21), because both the style cover 21 and the carrier 20, has a lot of curved, concave and convex parts and they are a single unitary structure developing with a complex design on the three cartesian axis as is easy appreciable from figures 2 to 6. Furthermore, an injection moulding process might result very expensive if one would like to manufacture such a complex design. Therefore additive manufacturing technology is able to solve these technical problem, allowing manufacture of such a complex design for single unitary structure objects, reducing costs and avoiding technical problems in preparing suitable moulds.

In a preferred embodiment the electronical components 10 may be placed and enclosed in one of the two sideway parts 24 of the frame 2. The sideway parts 24 are useful to have further available room for arranging cables and electronical components, because the eye tracking spectacles frame aim to be light and thin as much as possible.

As mentioned before the mechanical fastening profile 200, 210 allows a stable and reliable fastening mechanism between the style cover 21 and the carrier 20. Said mechanical fastening profile 200, 210 comprises a first profile 200 being integral part of the carrier 20 and a second profile 210 being integral part of the style cover 21,

According to a preferred embodiment said mechanical fastening profile 200, 210 is a snap fit profile, preferably a cantilever snap fit profile, that is an assembly method used to attach flexible parts, usually plastic. This mechanical fastening method allow to obtain the final frame 2 by pushing the style cover 21 and the carrier 20 interlocking them together very quickly and reliably. It is preferable that the second profile 210 comprises a cantilever 2110 and a retaining lip 2100 comprising in turn an entrance side 2101, allowing the retaining lip 2100 overcoming a connecting ledge 2000 integral part of on the first profile 200, in order to make easily the assembling phase. The second profile 210 further comprises a retraction side 2102 shaped for engaging and stably fitting over the corresponding connecting ledge 2000, thus preventing an easy disassembling of the style cover 21 from the carrier 20.

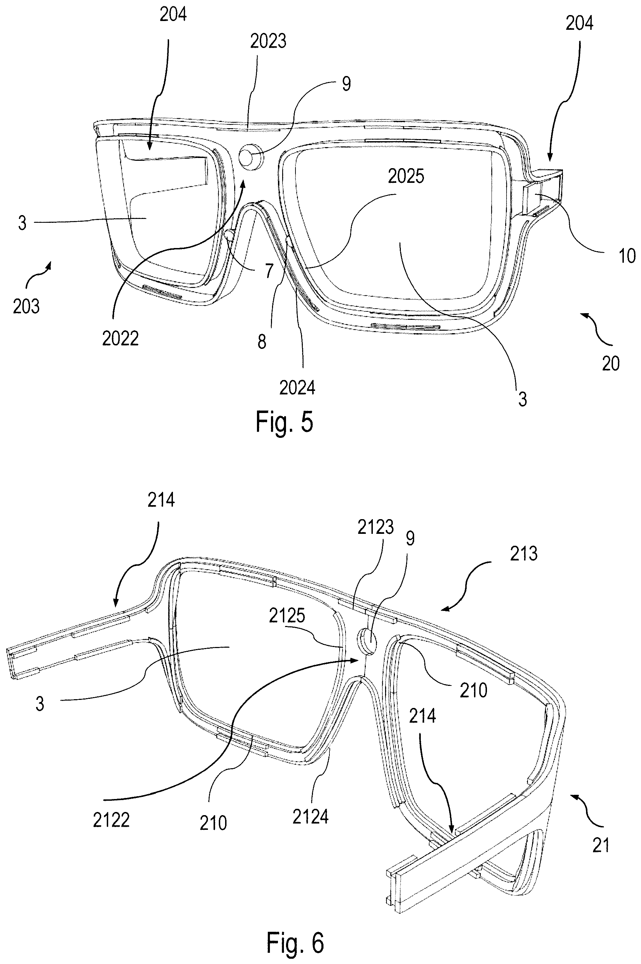

According to a first preferred embodiment (see fig. 5 and fig. 6) the first profile 200 and the second profile 210 are countinuus profiles along an upper edge 2023, 2123, a lower edge 2024, 2124, a receiving opening edge 2025, 2125 respectively of the carrier 20 and of the style cover 21 onto at least an U-shaped portions 2022, 2122 of the carrier 20 and of the style cover 21, and onto at least a further part of the edge profile of the carrier 20 and the style cover 21 where is located the electronical components 10. In this case the first profile 200 and the second profile 210 are discountinuoses along the entire edge of the style cover 21 and of the carrier 20 of the frame 2.

The U-shaped portions 2022, 2122 of the carrier 20 and of the style cover 21 substantially correspond to the relevant U-shaped portion 22 of the frame 2.

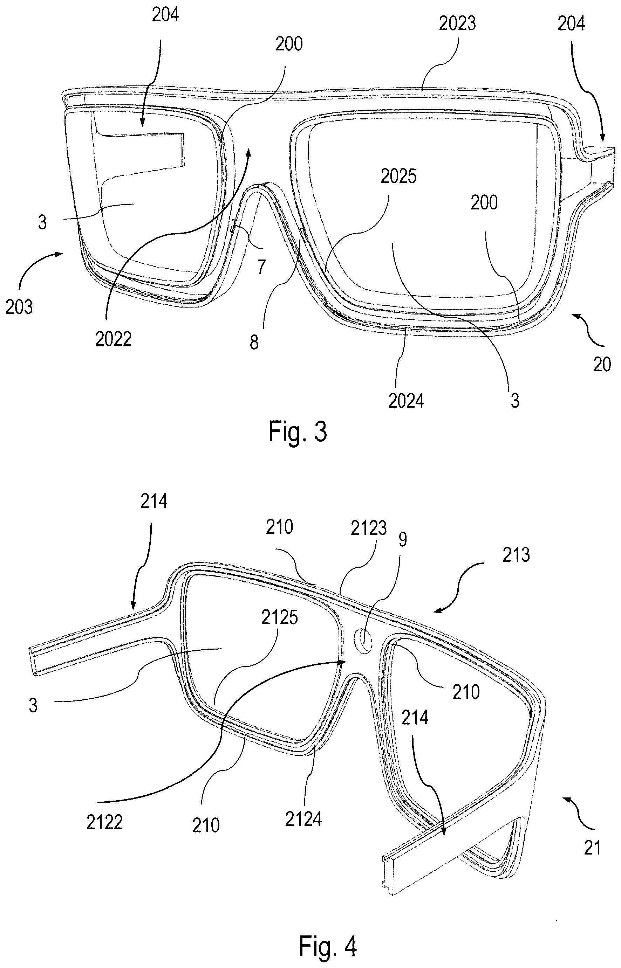

According to a second embodiment (see fig. 3 and fig. 4) of the present invention, the first profile 200 and the second profile 210 are countinuus profiles along the upper edge 2023, 2123, the lower edge 2024, 2124, a receiving opening edge 2025, 2125 respectively of the carrier 20 and of the style cover 21 forming the frame 2, providing a more robust assembled frame 2.

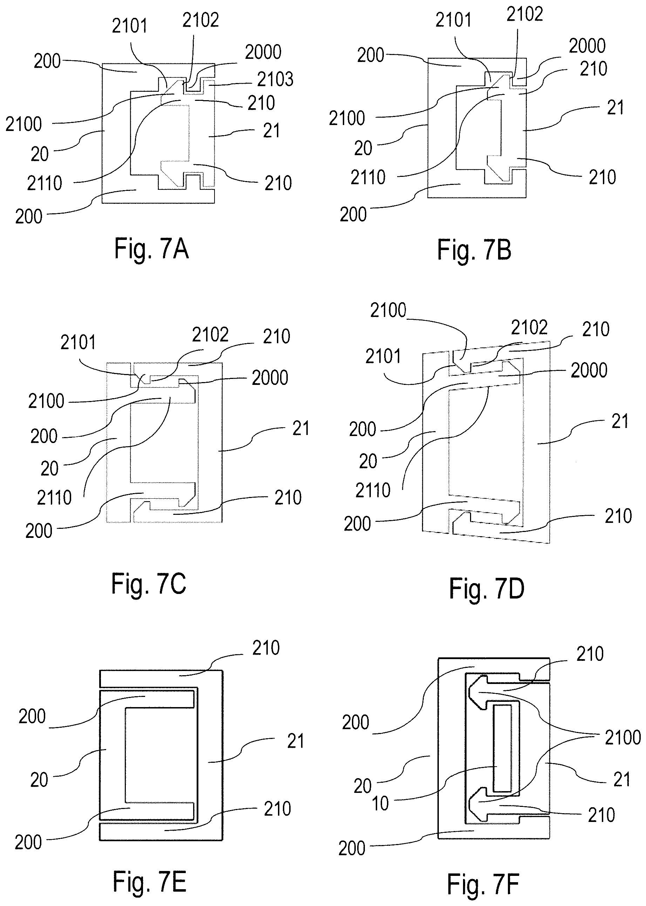

According to further embodiments of the present invention (see fig. 7A-7F) said first profile 200 and said second profile 210 are arranged to change gradually their geometry sections, providing a stronger fastening connection between the style cover 21 and the carrier 20 at least in the U-shaped portions 2022, 2122 of the carrier 20 and of the style cover 21 and where the frame 2 encloses the electronical components 10, when the carrier 20 and the style cover 21 are fastened together. In particular in order to provide a stronger connection between the carrier 20 and the style cover 21, it is possible to increase the height of the cross section at the fixed end of the cantilever 2110 or the retraction side 2102 of the retaining lip 2100 or the length of the cantilever 2110 as showed in fig. 7A or again creating a reinforcing protrusion 2103 as showed in fig. 7A.

In a preferred embodiment of the present invention (see fig. 1 to 7B) the carrier 20 has a C-shaped section and said first profile 200 is made facing inwardly the carrier 20 and along both side parts of its C-shaped section, while the style cover 21 has an I-shaped section and said second profile 210 is made along both ending edges of the I-shaped section.

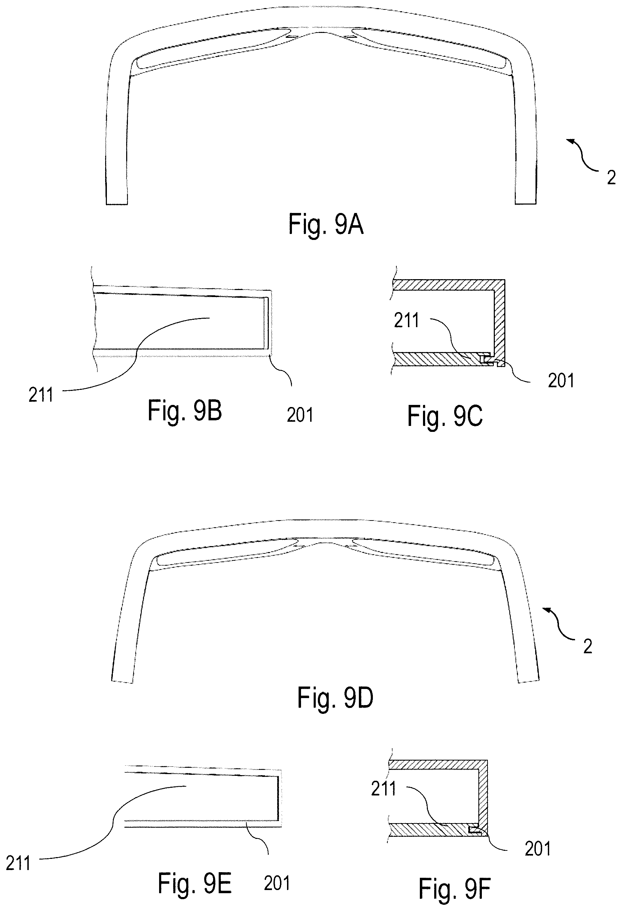

In this case, thanks to the flexibility of the cantilever part of this particular cantilever snap fit fastening method in some parts along the frame 2, an ending part 201 of the style cover 20 is able to slide on the corresponding ending part 211 of the carrier 21 when in use, giving flexibility to the spectacles frame 2, as it may be appreciated if one looks at figures 9A to 9F. In particular in case of a user with a small head (fig. 9A) between the ending part 201 of the style cover 20 and ending part 211 of the carrier 21 is clearly present a small gap (fig. 9B and 9C). Otherwise in case of a user with a big head (fig. 9D) between the ending part 201 of the style cover 20 and ending part 211 of the carrier 21 said small gap is not present almost at all (fig. 9E and 9F).

In a further embodiment of the present invention (see fig. 7C to 7F) the carrier 20 has a C-shaped section and said first profile 200 is made facing ouwardly the carrier 20 along both side parts of its C-shaped section, while the style cover 21 has an C-shaped section and said second profile 210 is made facing inwardly along each side part of its C-shaped section. In this case both said first profile 200 and said second profile 210 are a particular version of cantilever snap fit profile, as they can move away one another until lengths of the cantilever allow it (see fig. 7C to 7E). In fact side parts of the style cover 21 are able to move close to/away from the corresponding side parts of the carrier 20 along the corresponding cantilever profile until being blocked by the relevant retaining lip if present, allowing the style cover 21 to be closer or further away to/from the carrier 20, thus giving flexibility to the spectacles frame 2 which is therefore able to adapt to different head sizes. In a further embodiment of the present invention (see fig. 7D) the carrier 20 has a tapered C-shaped section and said first profile 200 is made facing ouwardly the carrier 20 along both side parts of its C-shaped section, while the style cover 21 has a tapered C-shaped section compatible with the carrier 20, as showed in fig. 7D, and said second profile 210 is made facing inwardly along each side part of its C-shaped section. In this case the tapered C shaped sections of both the carrier 20 ant the style cover 21 may confer locally or along the entire edge of the frame 2 a more robustness and a more reliable connection between the two main parts of the eye tracking spectacles frame 2. On the contrary C shaped sections of the carrier 20 and the style cover 21 showed in fig. 7E allow more flexibility locally to the frame 2, as said two main parts can move more one another.

It shall be highlighted that the disclosed spectacles frame flexibility may be permitted by both kind of mutual movements described between the carrier 20 and the style cover 21, i.e. the sliding movement between the ending part 201 of the style cover 20 and the corresponding ending part 211 of the carrier 21 (in the C shaped and I shaped configuration) or the moving away/close to between the corresponding sideway parts of the carrier 20/style cover 21 along the relevant cantilever profile (in the C shaped and C shaped configuration), and this feature occurring in whatever structural configuration described in the present specification with different proportion between the two kind of movements described.

Figure 7F shows that taking into account the C-shaped sections of fig. 7E, the second profile 210 may comprise a special design of the retaining lips 2100, being able to block and retain electronical components 10 for instance. In this case due to the fact that the electronical components 10 are retained by and are directly in contact with the style cover 21, possible hot points are faced outwardly: This particular embodiment avoids possible hot points be faced inwardly the spectacles, near the wearer's head, thus preventing problems of discomfort for the user (see fig. 7F).

It shall be highlighted that the style cover 21, may be characterized by having both I shaped section and C shaped section in different part along its geometric develop, conferring different technical features to different specific parts of the spectacles frame 2.

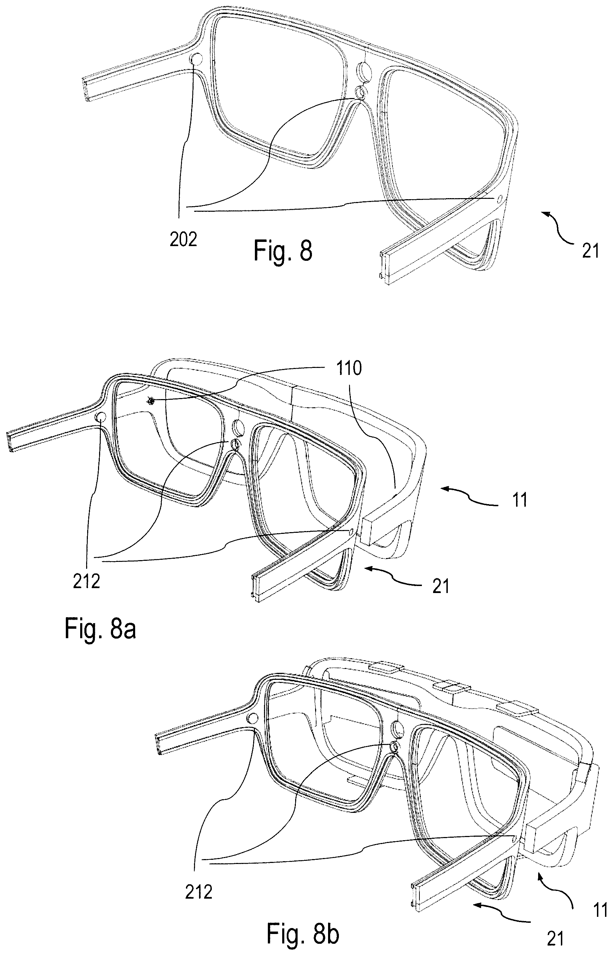

In a further embodiment of the present invention (see fig. 8) the style cover 21 comprises at least one third profile 212 for engaging and easily disengaging a corresponding fourth profile 110 of a device 11 to the frame 2 of the eye tracking spectacles 1. The device 11 might be specific sunglasses (fig. 8a) or further customized style cover for specific uses or specific clients or a further device like a mixed reality display (fig. 8b).

The third profile 212 may be a female profile and the fourth profile 110 may be a male profile comprising for instance a cantilever and retaining lip with an entrance side allowing an easy assembling step and a retraction side accordingly designed for allowing easy disassembling step of the device 11 from the style cover 21. Other shape section of the third profile 212 and of the fourth profile 110 may be arranged with a different design provided that such a design allows easy assembling/disassembling step between the style cover 21 and the carrier 20.

Furthermore even the carrier 20 may provide for at least one profile facing inwardly for engaging and easily disengaging a corresponding profile of further third parts, like soft elements for improving wearing comfort or for adapting the eye tracking spectacles to very specific head/face shapes, or like a specific mask for specific dangerous environment, or other third parts in general.

Furthermore the present invention relates also to a method for manufacturing the eye tracking spectacles as described hereinbefore, the method comprising additively manufacturing the style cover 2 and the carrier 20 comprising as integral parts their relevant first profile 200, second profile 210 and third profile 212, said style cover 21 and said carrier 20 being manufactured each other as a single unitary structure with a additively manufacturing process.

Furthermore the manufacturing method comprises the step of assembling together the style cover 21 and the carrier 20 by pushing the style cover 21 and the carrier 20 interlocking them together, thus forming the frame 2 of the eye tracking spectacles having all the features and according to all the embodiments described and disclosed in this specification.

## Claims

1. An eye tracking spectacles (1) comprising
- a frame (2) having at least one receiving opening (3) for receiving a disk-like structure, and wherein the frame (2) has a U-shaped portion (22) for arranging the spectacles (1) on the nose of a human being, said frame (2) including
- a right eye detecion camera (7) for detecting the position of the right pupil of a user and
- a left eye detection camera (8) for detecting the position of the left pupil of a user,
- a field of view camera (9) for recording a field of vision video including individual and successive field of vision images,
- electronical components (10) for processing data from at least the eye cameras (7,8) when in use
**characterized in that**
said frame (2) being formed by at least two main parts, those being a carrier (20) and a style cover (21),
wherein said carrier (20) and said style cover (21) are stably fastened together by a mechanical fastening profile (200, 210) comprising a first profile (200) being integral part of the carrier (20) and a second profile (210) being integral part of the style cover (21), said carrier (20) and said style cover (21) enclosing at least the eye cameras (7, 8) and at least one field of view camera (9), when said carrier (20) and said style cover (21) are fastened together, said mechanical fastening profile (200, 210) being able to give flexibilty to the frame (2) when in use,
and wherein both said carrier (20) and said style cover (21) are each other a single unitary structure compatible to be manufactured by an additively manufacturing process.

2. The eye tracking spectacles according to claim 1 wherein said U-shaped portion (22) is located in the front part (23) of the frame (2) and is laterally delimited by the two receiving openings (3) and encloses at least the eye cameras (7, 8) or the field of view camera (9) and furthermore wherein the frame (2) comprises at least one sideway part (24) enclosing the electronical components (10) and wherein both said style cover (21) and said carrier (20) comprise respectively and accordingly a front part (213, 203) and sideway parts (214, 204) perpendicular to the corresponding front part (213, 203).

3. The eye tracking spectacles according to claim 1 and 2, wherein said mechanical fastening profile (200, 210) is a snap fit profile, preferably a cantilever snap fit profile.

4. The eye tracking spectacles according to claims 1 to 3, wherein said second profile (210) comprises a cantilever (2110) and a retaining lip (2100) comprising in turn an entrance side (2101) allowing the retaining lip (2100) overcoming a connecting ledge (2000) integral part of on the first profile (200), in order to make easily the assembling step, said second profile (210) further comprising a retraction side (2102) shaped for engaging and stably fitting over the corresponding connecting ledge (2000), thus preventing an easy disassembling of the style cover (21) from the carrier (20).

5. The eye tracking spectacles according to one of the preceedings claims 1 to 4, wherein said first profile (200) and said second profile (210) are countinuus profiles along an upper edge (2023, 2123), a lower edge (2024, 2124), a receiving opening edge (2025, 2125) respectively of the carrier (20) and of the style cover (21) onto at least U-shaped portions (2022, 2122) of the carrier (20) and of the style cover (21) corresponding to the U-shaped portion (22) of the frame (2), and onto at least a further part of the edge profile of the carrier (20) and of the style cover (21) where are located the electronical components (10), thus said first profile (200) and said second profile (210) being discountinuoses along the entire edge of the frame (2).

6. The eye tracking spectacles according to one of the preceedings claims 1 to 4, wherein said first profile (200) and said second profile (210) are countinuus profiles along an upper edge (2023, 2123), a lower edge (2024, 2124), a receiving opening edge (2025, 2125) respectively of the carrier (20) and of the style cover (21) forming the frame (2).

7. The eye tracking spectacles according to one of the preceedings claims, said first profile (200) and said second profile (210) are arranged to change gradually their geometry sections, providing a stronger fastening connection between the style cover (21) and the carrier (20) at least in the U-shaped portions (2022, 2122) of the carrier (20) and of the style cover (21) and where the frame (2) encloses the electronical components (10), when the carrier (20) and the style cover (21) are fastened together.

8. The eye tracking spectacles according to one of the preceeding claims 4 to 7, wherein the carrier (20) has a C-shaped section and said first profile (200) is made facing inwardly the carrier (20) and along both side parts of its C-shaped section, while the style cover (21) has an I-shaped section and said second profile (210) is made along both ending edges of the I-shaped section.

9. The eye tracking spectacles according to one of the preceeding claims 4 to 8, wherein an ending part (201) of the style cover (20) is able to slide on the corresponding ending part (211) of the carrier (21) when in use, giving flexibility to the spectacles frame (2).

10. The eye tracking spectacles according to one of the preceeding claims 4 to 7, wherein the carrier (20) has a C-shaped section and said first profile (200) is made facing ouwardly the carrier (20) along both side parts of its C-shaped section, while the style cover (21) has an C-shaped section and said second profile (210) is made facing inwardly along each side part of its C-shaped section.

11. The eye tracking spectacles according to claim 10, wherein side parts of the style cover (21) are able to move close to/away from the corresponding side parts of the carrier (20) along the corresponding cantilever profile until being blocked by the relevant retaining lip, allowing the style cover (21) to be closer or further away to/from the carrier (20), thus giving flexibility to the spectacles frame (2).

12. The eye tracking spectacles according to one of the preceedings claims, wherein said style cover (21) comprises at least one third profile (212) for engaging and easily disengaging a corresponding fourth profile (110) of a device (11) to the frame (2) of the eye tracking spectacles.

13. The eye tracking spectacles according to one of the preceedings claims, wherein said device (11) is a further customized style cover for specific uses or a further device like a mixed reality display or specific sunglasses.

14. A method for manufacturing the eye tracking spectacles according to one of the preceeding claims, the method comprising additively manufacturing the style cover (21) and the carrier (20) of the frame (2) of the eye tracking spectacles, said style cover (21) and said carrier (20) being manufactured each other as a single unitary structure with a additively manufacturing process.

15. The method according to claim 14 further comprising the step of assembling together the style cover (21) and the carrier (20) by pushing the style cover (21) and the carrier (20) interlocking them together, thus forming the frame (2) of the eye tracking spectacles according to one of the preceeding claims 1 to 13.

## Patentansprüche

1. Eine Augenverfolgungsbrille (1) aufweisend
- einen Rahmen (2) mit mindestens einer Aufnahmeöffnung (3) zur Aufnahme einer scheibenförmigen Struktur, wobei der Rahmen (2) einen U-förmigen Abschnitt (22) zur Anordnung der Brille (1) auf der Nase eines Menschen aufweist, der Rahmen (2) umfassend
- eine rechte Augenerkennungskamera (7) zur Erkennung der Position der rechten Pupille eines Benutzers und
- eine linke Augenerkennungskamera (8) zur Erkennung der Position der linken Pupille eines Benutzers,
- eine Sichtfeldkamera (9) zur Aufzeichnung eines Sichtfeldvideos einschließlich einzelner und aufeinanderfolgender Sichtfeldbilder,
- elektronische Komponenten (10) zur Verarbeitung von Daten von zumindest den Augenkameras (7, 8) im Betriebszustand,
**dadurch gekennzeichnet, dass** der Rahmen (2) aus mindestens zwei Hauptteilen gebildet wird, nämlich einem Träger (20) und einer Design-Abdeckung (21),
wobei der Träger (20) und die Stilabdeckung (21) durch ein mechanisches Befestigungsprofil (200, 210) stabil miteinander verbunden sind, das Befestigungsprofil (200, 210) aufweisend ein erstes Profil (200), welches integraler Bestandteil des Trägers (20) ist, und ein zweites Profil (210), welches integraler Bestandteil der Stil-Abdeckung (21) ist, wobei Träger (20) und Stil-Abdeckung (21) im verbundenen Zustand zumindest die Augenkameras (7, 8) und zumindestens eine Sichtfeldkamera (9) umschließen, wobei das mechanische Befestigungsprofil (200, 210) im Betriebszustand dem Rahmen (2) Flexibilität verleihen kann,
und wobei sowohl Träger (20) als auch Stilabdeckung (21) jeweils einzelne einheitliche Strukturen sind, welche sich für die Herstellung mittels additiver Fertigungsverfahren eignen.

2. Die Augenverfolgungsbrille nach Anspruch 1, wobei der U-förmige Abschnitt (22) im vorderen Teil (23) des Rahmens (2) angeordnet und seitlich durch die beiden Aufnahmeöffnungen (3) begrenzt ist und mindestens die Augenkameras (7, 8) oder die Sichtfeldkamera (9) umschließt und wobei ferner der Rahmen (2) mindestens einen seitlichen Teil (24) umfasst, der die elektronischen Bauteile (10) umschließt, und wobei sowohl die Stilabdeckung (21) als auch der Träger (20) jeweils einen Vorderteil (213, 203) und dazu senkrechte Seitenteile (214, 204) aufweisen.

3. Die Augenverfolgungsbrillen nach Anspruch 1 und 2, wobei das mechanische Befestigungsprofil (200, 210) ein Schnappverschlussprofil, vorzugsweise ein Ausleger-Schnappverschlussprofil ist.

4. Die Augenverfolgungsbrille nach den Ansprüchen 1 bis 3, wobei das zweite Profil (210) einen Ausleger (2110) und eine Haltelippe (2100) umfasst, die wiederum eine Eingangsseite (2101) aufweist, welche es der Haltelippe (2100) ermöglicht, eine Verbindungskante (2000) zu überwinden, die ein integraler Bestandteil des ersten Profils (200) ist, um den Montagevorgang zu erleichtern, das zweite Profil (210) ferner umfassend eine Rückzugsseite (2102), die so geformt ist, dass sie in die entsprechende Verbindungskante (2000) eingreift und stabil darüber passt, wodurch ein leichtes Ablösen der Stilabdeckung (21) vom Träger (20) verhindert wird.

5. Die Augenverfolgungsbrille nach einem der vorhergehenden Ansprüche 1 bis 4, wobei das erste Profil (200) und das zweite Profil (210) jeweils durchgehende Profile entlang einer oberen Kante (2023, 2123), einer unteren Kante (2024, 2124), einer Aufnahmeöffnungskante (2025, 2125) des Trägers (20) und der Stilabdeckung (21) sind, auf zumindest U-förmigen Abschnitten (2022, 2122) des Trägers (20) und der Stilabdeckung (21), die dem U-förmigen Abschnitt (22) des Rahmens (2) entsprechen, und auf mindestens einen weiteren Teil des Kantenprofils des Trägers (20) und der Stilabdeckung (21), wo sich die elektronischen Komponenten (10) befinden, sodass das erste Profil (200) und das zweite Profil (210) entlang der gesamten Kante des Rahmens (2) nicht durchgehend sind.

6. Die Augenverfolgungsbrille nach einem der vorhergehenden Ansprüche 1 bis 4, wobei das erste Profil (200) und das zweite Profil (210) jeweils durchgehende Profile entlang einer oberen Kante (2023, 2123), einer unteren Kante (2024, 2124) und einer Aufnahmeöffnungskante (2025, 2125) des Trägers (20) und der Stilabdeckung (21) sind, die den Rahmen (2) bilden.

7. Die Augenverfolgungsbrille nach einem der vorhergehenden Ansprüche, wobei das erste Profil (200) und das zweite Profil (210) so angeordnet sind, dass sich ihre geometrischen Abschnitte graduell ändern, wodurch im verbundenen Zustand eine stärkere Befestigungsverbindung zwischen der Stilabdeckung (21) und dem Träger (20) zumindest in den U-förmigen Abschnitten (2022, 2122) des Trägers (20) und der Stilabdeckung (21) sowie dort, wo der Rahmen (2) die elektronischen Komponenten (10) umschließt, gewährleistet wird.

8. Die Augenverfolgungsbrille nach einem der vorhergehenden Ansprüche 4 bis 7, wobei der Träger (20) einen C-förmigen Abschnitt aufweist und das erste Profil (200) nach innen zum Träger (20) gerichtet und entlang beider Seitenteile seines C-förmigen Abschnitts ausgebildet ist, während die Stilabdeckung (21) einen I-förmigen Abschnitt aufweist und das zweite Profil (210) entlang beider Endkanten des I-förmigen Abschnitts ausgebildet ist.

9. Die Augenverfolgungsbrille nach einem der vorhergehenden Ansprüche 4 bis 8, wobei ein Endteil (201) der Stilabdeckung (20) im Betriebszustand auf dem entsprechenden Endteil (211) des Trägers (21) verschiebbar ist und so dem Rahmen (2) Flexibilität verleiht.

10. Die Augenverfolgungsbrille nach einem der vorhergehenden Ansprüche 4 bis 7, wobei der Träger (20) einen C-förmigen Abschnitt aufweist und das erste Profil (200) entlang beider Seitenteile des C-förmigen Abschnitts gegenüber dem Träger (20) nach außen gerichtet ist, während die Stilabdeckung (21) einen C-förmigen Abschnitt aufweist und das zweite Profil (210) entlang beider Seitenteile des C-förmigen Abschnitts nach innen gerichtet ist.

11. Die Augenverfolgungsbrille nach Anspruch 10, wobei sich Seitenteile der Stilabdeckung (21) entlang des entsprechenden Auslegerprofils an die entsprechenden Seitenteile des Trägers (20) annähern bzw. von ihnen entfernen können, bis sie durch die entsprechende Haltelippe blockiert werden, wodurch die Stilabdeckung (21) näher an den Träger (20) herangeführt oder von ihm weggeführt werden kann, wodurch dem Brillenrahmen (2) Flexibilität verleiht wird.

12. Die Augenverfolgungsbrille nach einem der vorhergehenden Ansprüche, wobei die Stilabdeckung (21) zumindest ein drittes Profil (212) zum Eingreifen und einfachen Lösen eines entsprechenden vierten Profils (110) einer Vorrichtung (11) an dem Rahmen (2) der Augenverfolgungsbrille aufweist.

13. Die Augenverfolgungsbrille nach einem der vorhergehenden Ansprüche, wobei es sich bei der Vorrichtung (11) um eine weitere individuell angepasste Stilabdeckung für bestimmte Verwendungszwecke oder eine weitere Vorrichtung wie ein Mixed-Reality-Display oder eine spezielle Sonnenbrille handelt.

14. Verfahren zur Herstellung der Augenverfolgungsbrille nach einem der vorhergehenden Ansprüche, das Verfahren umfassend die additive Fertigung der Stilabdeckung (21) und des Trägers (20) des Rahmens (2) der Eye-Tracking-Brille, wobei die Stilabdeckung (21) und der Träger (20) jeweils als einzelne einheitliche Strukturen mittels eines additiven Fertigungsverfahrens hergestellt werden.

15. Das Verfahren nach Anspruch 14 umfasst ferner den Schritt des Zusammenbaus der Stilabdeckung (21) und des Trägers (20) durch Zusammendrücken der Stilabdeckung (21) und des Trägers (20), wodurch diese ineinandergreifen und so der Rahmen (2) der Augenverfolgungsbrille entsprechend einem der vorhergehenden Ansprüche 1 bis 13 gebildet wird.

## Revendications

1. Lunettes de suivi oculaire (1) comprenant
- une monture (2) avec au moins une ouverture de réception (3) pour recevoir une structure en forme de disque, la monture (2) présentant une partie en forme de U (22) pour placer les lunettes (1) sur le nez d'une personne, la monture (2) comprenan,
- une caméra de détection de l'œil droit (7) pour détecter la position de la pupille droite d'un utilisateur et,
- une caméra de détection de l'œil gauche (8) pour détecter la position de la pupille gauche d'un utilisateur,
- une caméra de champ de vision (9) pour enregistrer une vidéo du champ de vision comprenant des images individuelles et successives du champ de vision,
- des composants électroniques (10) pour traiter les données provenant au moins des caméras d'œil (7, 8) en état de fonctionnement,
**caractérisé en ce que** le cadre (2) est formé d'au moins deux parties principales, à savoir un support (20) et un revêtement stylisé (21),
le support (20) et le revêtement stylisé (21) étant reliés de manière stable l'un à l'autre par un profilé de fixation mécanique (200, 210), qui comprenant un premier profilé (200) qui fait partie intégrante du support (20) et un deuxième profilé (210) qui fait partie intégrante du revêtement stylisé (21), le support (20) et le revêtement stylisé (21) entourant, à l'état assemblé, au moins les caméras d'œil (7, 8) et au moins une caméra de champ de vision (9), le profilé de fixation mécanique (200, 210) pouvant conférer flexibilité au cadre (2) à l'état de service,
et dans lequel le support (20) et le revêtement stylisé (21) sont chacun des structures unitaires individuelles qui se prêtent à la fabrication au moyen de procédés de fabrication additive.

2. Les lunettes de suivi oculaire selon la revendication 1, dans lesquelles la partie en forme de U (22) est disposée dans la partie avant (23) de la monture (2) et est délimitée latéralement par les deux ouvertures de réception (3) et entoure au moins les caméras d'œil (7, 8) ou la caméra de champ de vision (9), et dans lesquelles la monture (2) comprend au moins une partie latérale (24) qui entoure les composants électroniques (10), et dans lesquelles tant le revêtement stylisé (21) que le support (20) présentent chacun une partie avant (213, 203) et des parties latérales (214, 204) perpendiculaires à celle-ci.

3. Les lunettes de suivi oculaire selon les revendications 1 et 2, dans lesquelles le profilé de fixation mécanique (200, 210) est un profilé à fermeture à encliquetage, de préférence un profilé à fermeture à encliquetage en porte-à-faux.

4. Les lunettes de suivi oculaire selon les revendications 1 à 3, dans lesquelles le deuxième profilé (210) comprend un bras (2110) et une lèvre de retenue (2100) qui présente à son tour un côté d'entrée (2101) qui permet à la lèvre de retenue (2100) de surmonter un bord de jonction (2000) qui fait partie intégrante du premier profilé (200) afin de faciliter le processus d'assemblage, le deuxième profilé (210) comprenant en outre un côté de retrait (2102) qui est formé de manière à s'engager dans le bord de connexion correspondant (2000) et s'ajuste de manière stable par-dessus celui-ci, empêchant ainsi un détachement facile du revêtement stylisé (21) du support (20).

5. Les lunettes de suivi oculaire selon l'une des revendications 1 à 4 précédentes, dans lesquelles le premier profilé (200) et le deuxième profilé (210) sont chacun des profilés continus le long d'un bord supérieur (2023, 2123), d'un bord inférieur (2024, 2124), d'un bord d'ouverture de réception (2025, 2125) du support (20) et du revêtement stylisé (21), sur au moins des sections en forme de U (2022, 2122) du support (20) et du revêtement stylisé (21) qui correspondent à la section en forme de U (22) de la monture (2), et sur au moins une autre partie du profil de bord du support (20) et du revêtement stylisé (21) où se trouvent les composants électroniques (10), de sorte que le premier profil (200) et le deuxième profil (210) ne sont pas continus sur tout le bord du cadre (2).

6. Les lunettes de suivi oculaire selon l'une des revendications 1 à 4 précédentes, dans lesquelles le premier profilé (200) et le deuxième profilé (210) sont respectivement des profilés continus le long d'un bord supérieur (2023, 2123), d'un bord inférieur (2024, 2124) et d'un bord d'ouverture de réception (2025, 2125) du support (20) et du revêtement stylisé (21) formant la monture (2).

7. Les lunettes de suivi oculaire selon l'une des revendications précédentes, dans lesquelles le premier profilé (200) et le deuxième profilé (210) sont disposés de telle sorte que leurs sections géométriques changent progressivement, ce qui, à l'état assemblé, crée une liaison de fixation plus solide entre le revêtement stylisé (21) et le support (20) au moins dans les sections en forme de U (2022, 2122) du support (20) et du revêtement stylisé (21) et là où le cadre (2) renferme les composants électroniques (10).

8. Les lunettes de suivi oculaire selon l'une des revendications 4 à 7 précédentes, dans lesquelles le support (20) présente une section en forme de C et le premier profilé (200) étant orienté vers l'intérieur vers le support (20) et formé le long des deux parties latérales de sa partie en forme de C, tandis que le revêtement sylisé (21) comporte une partie en forme de I et le deuxième profilé (210) est formé le long des deux bords d'extrémité de la partie en forme de I.

9. Les lunettes de suivi oculaire selon l'une des revendications 4 à 8 précédentes, dans lesquelles une partie d'extrémité (201) du revêtement sylisé (20) peut coulisser, en état de service, sur la partie d'extrémité correspondante (211)de la monture (21), conférant ainsi flexibilité à la monture (2).

10. Les lunettes de suivi oculaire selon l'une des revendications 4 à 7 précédentes, dans lesquelles le support (20) présente une section en forme de C et le premier profilé (200) étant orienté vers l'extérieur le long des deux parties latérales de la section en forme de C par rapport au support (20), tandis que le revêtement sylisé (21) présente une section en forme de C et que le deuxième profilé (210) est orienté vers l'intérieur le long des deux parties latérales de la section en forme de C.

11. Les lunettes de suivi oculaire selon la revendication 10, dans lesquelles les parties latérales du revêtement sylisé (21) peuvent se rapprocher ou s'éloigner des parties latérales correspondantes du support (20) le long du profilé en porte-à-faux correspondant jusqu'à ce qu'elles soient bloquées par la lèvre de retenue correspondante, ce qui permet de rapprocher ou d'éloigner le revêtement sylisé (21) du support (20), conférant ainsi flexibilité à la monture de lunettes (2).

12. Les lunettes de suivi oculaire selon l'une des revendications précédentes, dans lesquelles le revêtement sylisé (21) comporte au moins un troisième profilé (212) destiné à s'engager et à se dégager facilement d'un quatrième profilé correspondant (110) d'un dispositif (11) sur la monture (2) des Lunettes de suivi oculaire.

13. Les lunettes de suivi oculaire selon l'une des revendications précédentes, le dispositif (11) étant un autre revêtement sylisé personnalisé pour des utilisations spécifiques ou un autre dispositif tel qu'un écran de réalité mixte ou des lunettes de soleil spéciales.

14. Procédé de fabrication des lunettes de suivi oculaire selon l'une des revendications précédentes, le procédé comprenant la fabrication additive du revêtement sylisé (21) et du support (20) de la monture (2) des lunettes de suivi oculaire, le revêtement sylisé (21) et le support (20) étant chacun fabriqués sous forme de structures unitaires individuelles au moyen d'un procédé de fabrication additive.

15. Le procédé selon la revendication 14 comprend en outre l'étape consistant à assembler le revêtement sylisé (21) et le support (20) en pressant le revêtement sylisé (21) et le support (20) l'un contre l'autre, ce qui les emboîte l'un dans l'autre et forme ainsi la monture (2) des lunettes de suivi oculaire selon l'une des revendications 1 à 13 précédentes.
